# EUROPÄISCHE PATENTANMELDUNG

(11) **EP 2 495 460 A2**
(43) Veröffentlichungstag der Anmeldung: **05.09.2012**
(21) Anmeldenummer: 12001477.4
(22) Anmeldetag: 05.03.2012
(51) Int. Cl.: F16C 1/10

(54) **Bowdenzugkupplung**

(30) Priorität: 04.03.2011 DE 102011012969
(71) Anmelder: SCS Deutschland GmbH & Co. KG, 57319 Bad Berleburg (DE)
(72) Erfinder: Hillwig, Frank, 57319 Bad Berleburg (DE); Sabisch, Dieter, 57319 Bad Berleburg (DE)
(74) Vertreter: Kross, Ulrich

(57) **Zusammenfassung**

Die Erfindung betrifft eine Bowdenzugkupplung zum lösbaren Verkuppeln zweier Bowdenzüge innerhalb eines Gehäuses (2,8), wobei die gleichzeitig verkuppelten Bowdenzugseelen (1,9) entlang ihrer Längsachse über einen vorgegebenen Maximalweg verschiebbar gelagert sind, und wobei das Gehäuse wenigstens zwei Gehäuseteile (2,8) umfasst, welche über eine Axialbewegung in Bezug auf die Bowdenzüge, die wenigstens eine Drehkomponente um die Längsachse der Bowdenzüge umfasst, wasser- und staubdicht miteinander verbindbar und verrastbar sind. Die Erfindung betrifft darüber hinaus ein Verfahren zum lösbaren Verkuppeln zweier Bowdenzüge mittels einer derartigen Bowdenzugkupplung.

## Beschreibung

### 1. Gebiet der Erfindung

Die Erfindung betrifft eine Bowdenzugkupplung zum lösbaren Verkuppeln zweier Bowdenzüge innerhalb eines Gehäuses, wobei die verkuppelten Bowdenzugseile entlang ihrer Längsache über einen vorgegebenen Maximalweg verschiebbar gelagert sind, sowie ein Verfahren zum wieder lösbaren Verkuppeln zweier Bowdenzüge mittels einer derartigen Bowdenzugkupplung.

Insbesondere bei Kraftfahrzeugen werden eine Reihe von Betätigungsfunktionen mit Hilfe von Betätigungszügen, auch Bowdenzüge genannt, durchgeführt, da sie einfach und robust sind, ein geringes Gewicht aufweisen und im Regelfall auch problemlos verlegt werden können. Einsatzgebiete für derartige Bowdenzüge sind insbesondere Fensterhebemechanismen oder Türzuziehhilfen in Kraftfahrzeugen. Bei derartigen Bowdenzügen besteht ein Betätigungszug im Grundsatz aus zwei Teilen, nämlich einer schlauchförmigen Bowdenzughülle und einem darin geführten, meist litzenartigen Draht- oder Seilzug, auch Seele genannt. An beiden Enden des Betätigungsmantels steht die Bowdenzugseele vor und weist dort Anschlussstücke auf, mit denen das eine Ende an einen Antrieb und das andere Ende an einem zu betätigendem Organ befestigt ist.

Um die Montage eines längeren Betätigungszuges zu vereinfachen oder eine Vormontage bereits im Lieferzustand an das Werk zu ermöglichen, sind mehrteilige Betätigungszüge entwickelt worden, die in zwei oder auch mehr Betätigungszugabschnitte aufgeteilt sind. Die Betätigungsabschnitte sind mittels einer üblicherweise lösbaren Kupplungseinrichtung verbunden. Diese Kupplungseinrichtung weist ein Gehäuse mit einem Durchgangskanal auf, der von der Bowdenzugseele durchsetzt ist. Innerhalb des Kupplungsgehäuses sind die Bowdenzugseelenabschnitte über Kupplungsorgane ebenfalls üblicherweise lösbar miteinander verbunden. Diese Kupplungsorgane können sich wiederum innerhalb eines in dem Kupplungsgehäuse vorgesehenem Verschieberaums in axialer Richtung verschieben. Eine derartige Bowdenzugkupplung ist beispielsweise aus der DE 9012688 U1 bekannt.

Insbesondere bei Kraftfahrzeugen besteht verstärkt die Notwendigkeit, derartige Bowdenzugkupplungen in engem Bauraum und gegebenenfalls auch blind miteinander verbinden zu müssen. Darüber hinaus kann die Bowdenzugkupplung auch in Bereichen des Kraftfahrzeugs angeordnet sein, welche nicht gegen das Eindringen von Staub und/oder Feuchtigkeit bzw. Nässe geschützt sind. Es besteht darüber hinaus der Bedarf nach Bowdenzugkupplungen, die in einen der Nassräume einer Kraftfahrzeugtür, beispielsweise im Spritzraum hinter der Türinnenverkleidung oder in Türholmen, die möglicherweise auch als Wasserablauf genutzt werden, eingebaut werden können.

Hierfür hat der Stand der Technik Gehäuse vorgesehen, welche mittels einer Klappe wasser- und staubdicht verschließbar sind. Derartige Gehäuse weisen jedoch den Nachteil auf, dass sie üblicherweise einen größeren Bauraum erfordern und insbesondere beim Einwirken von Zugkräften oder Scherkräften auf die Bowdenzugkupplung oder das Gehäuse selbst ihre Dichtigkeit größtenteils verlieren.

Die DE 20 2006 015 796 U1 schlägt daher eine Kupplungseinrichtung mit einem Kupplungsgehäuse vor, bei dem Gehäuseteile hülsenartig und vorzugsweise über Rastnasen geführt miteinander verbunden werden können.

In der Praxis hat sich jedoch gezeigt, dass der Einbau derartiger Kupplungseinrichtungen in engen Bauräumen und insbesondere blind durch den Monteur nicht oder nur erschwert durchführbar ist. Gleiches gilt für das Lösen der einmal verbundenen Kupplungseinrichtung im Falle des Austauschs einer oder mehrerer Komponenten.

### 2. Aufgabe der Erfindung

Es war daher eine Aufgabe der Erfindung, eine Bowdenzugkupplung der eingangs genannten Art zur Verfügung zu stellen, welche die aus dem Stand der Technik bekannten Nachteile nicht aufweist und insbesondere eine sichere wasser- und staubdichte Verbindung zweier Bowdenzüge innerhalb eines Gehäuses ermöglicht. Diese Aufgabe wird im erfindungsgemäßen Sinne durch eine Bowdenzugkupplung, umfassend die Merkmale des Anspruchs 1, sowie ein Verfahren, umfassend die Merkmale des Anspruchs 13, gelöst. Vorteilhafte Ausgestaltungsformen sind in den jeweils abhängigen Ansprüchen definiert.

### 3. Zusammenfassung der Erfindung

Gemäß einem ersten Aspekt stellt die Erfindung eine Bowdenzugkupplung zum lösbaren Verkuppeln zweier Bowdenzüge innerhalb eines Gehäuses zur Verfügung, die sich dadurch auszeichnet, dass sie die Bowdenzughüllen und gleichzeitig die Bowdenzugseelen axial innerhalb eines Gehäuses wasser- und staubdicht miteinander verbindet, wobei diese Verbindung durch den Monteur gegebenenfalls in besonders engem Bauraum und gegebenenfalls blind erfolgen kann. Dies wird insbesondere dadurch unterstützt, dass die Verbindung der Bowdenzüge und der wenigstens zwei Gehäuseteile über eine einzige Axialbewegung erfolgt, wobei diese Bewegung wenigstens eine Drehkomponente um die Längsache der Bowdenzüge umfasst. Mit einer einzigen Montagebewegung erfolgt somit vorzugsweise nacheinander und gekoppelt die Verkupplung der einander gegenüberliegenden Bowdenzugenden oder von deren geeigneten Kupplungselementen und das abdichtende Verschließen des Gehäuses, vorzugsweise durch geeignete Dichtmittel im Bereich der Verbindung der Gehäuseteile. In der Verbindungsstellung erfolgt erfindungsgemäß zudem eine Verrastung der miteinander verbundenen Gehäuseteile, um dem Monteur eine haptische und/oder akustische Rückmeldung über den Abschluss der Kupplungsaktion zu vermitteln.

Nach Herstellung der erfindungsgemäßen Bowdenzugkupplung können die miteinander verbundenen Bowdenzugseelen innerhalb des Gehäuses über einen vorab definierten Weg verschoben werden, um sicher zu stellen, dass die Verbindung der Bowdenzüge dauerhaft vor Feuchtigkeit oder Nässe und Staub geschützt ist. Die Wasser- und Staubdichtigkeit der erfindungsgemäßen Bowdenzugkupplung erfüllt dabei dauerhaft den dem Fachmann bekannten IP 67-Standard.

Insbesondere beim Einsatz in Kraftfahrzeug-Türen und hier vor allem im Bereich von Zuziehhilfen für Türen verbinden Bowdenzüge ein oder mehrere Türschlösser mit einem Antrieb für die Bowdenzüge. In derartigen Einsatzfällen wird eine Betriebskraftübertragung von wenigstens 200 Newton, bevorzugt wenigstens 250 Newton auf das Seil gefordert. Überdies soll das System vorzugsweise so ausgelegt sein, dass auch hohe Missbrauchskräfte von maximal etwa 1000 Newton, die auf die Bowdenzüge einwirken können, von der Bowdenzugkupplung ohne Ausfall aufgenommen werden können. Darüber hinaus erfordern die engen Platzverhältnisse an diesem Einsatzort eine besonders platzsparende Bauweise. Vorzugsweise ist das Gehäuse der erfindungsgemäßen Bowdenzugkupplung daher so gestaltet, dass es einen Durchmesser von 30mm, vorzugsweise 25mm, über seine gesamte Länge nicht überschreitet.

Wie eingangs bereits erwähnt, ermöglicht die erfindungsgemäße Bowdenzugkupplung die Montage mittels einer einzigen Bewegung, die vorzugsweise händisch bewirkt werden kann. Die Demontage erfolgt durch Umkehr der Montagebewegung, wobei vor der Einleitung der Demontagebewegung eingerastete Rastmittel gegebenenfalls gesondert gelöst werden müssen. Bevorzugt wird jedoch eine Ausgestaltung der Erfindung, bei der die Lösung der Verrastung allein durch einmalige Überwindung eines erhöhten Widerstands erfolgen kann.

Bevorzugt wird eine Bowdenzugkupplung, deren Gehäuse aus zwei Teilen, insbesondere einem Gehäusekorpus und einem Deckel, besteht. Vorzugsweise ist einer der Bowdenzüge im Lieferzustand bereits mit dem ersten Gehäuseteil, vorzugsweise dem Deckel, verbunden, und der zweite Bowdenzug ist bereits mit dem zweiten Gehäuseteil, vorzugsweise dem Gehäusekorpus, verbunden. Besonders bevorzugt wird dabei, wenn die Bowdenzüge so innerhalb der Gehäuseteile angeordnet und insbesondere vorverrastet sind, so dass eine unverzügliche Montage durch Einleitung und Durchführung der Montagebewegung erfolgen kann, ohne dass vorab vom Monteur die einzelnen Bauteile noch zueinander ausgerichtet und gegebenenfalls aufeinander eingestellt werden müssen.

Überaus bevorzugt wird in diesem Zusammenhang, wenn die Vorverrastung durch Rastmittel bewirkt wird, die während der Montage aus ihrer Wirkstellung weggeführt werden, so dass die Vorverrastung durch die Montage der erfindungsgemäßen Bowdenzugkupplung aufgehoben wird. Die erfindungsgemäße Bowdenzugkupplung ist anschließend ohne jede Einschränkung funktionstüchtig.

Die Verbindung von Bowdenzügen und Gehäuseteilen erfolgt erfindungsgemäß durch eine Axialbewegung, welche mindestens eine Drehbewegungskomponente aufweist. Hierdurch wird mit besonders einfachen Mitteln die Dichtigkeit des Gehäuses unter Einwirkung von den Montagekräften entgegen wirkenden Dichtmitteln wie etwa O-Ringe bewirkt. Es kann hierdurch eine axiale Verbindung der Bowdenzüge sichergestellt werden, wodurch die Einwirkung von Scherkräften auf die erfindungsgemäße Bowdenzugkupplung während des bestimmungsgemäßen Einsatzes weitestgehend vermieden werden kann. Die axiale Kopplung der Bowdenzüge erlaubt die höchstmögliche Lastaufnahme ohne ein Verkippen oder Reibung zwischen Bauteilen der erfindungsgemäßen Bowdenzugkupplung.

Wie eingangs bereits erwähnt, erlaubt die erfindungsgemäße Bowdenzugkupplung ein Verschieben der miteinander gekoppelten Bowdenzüge innerhalb des geschlossenen Gehäuses zumindest innerhalb vorgegebener Grenzen. Bevorzugt wird hierbei, wenn das Gehäuse der erfindungsgemäßen Bowdenzugkupplung einen Verschieberaum aufweist, innerhalb dessen die verkuppelten Seelen gleitend gelagert sind. Besonders bevorzugt wird in diesem Zusammenhang, wenn die Formgebung des Verschieberaums auf die Form und Maße der Kupplungselemente für die Bowdenzüge abgestimmt ist. Überaus bevorzugt wird eine Ausgestaltungsform der Erfindung, bei der der Verschieberaum einen im Wesentlichen quadratischen oder rechteckigen Querschnitt aufweist und mit den Enden der Bowdenzüge verbundene Kupplungselemente eine gleiche Form mit nur leicht verminderten Außenmaßen aufweist. Hierdurch wird ein sicheres Gleiten innerhalb des Verschieberaum ohne die Gefahr von Torsion oder Verdrehung sichergestellt.

Die Bowdenzugseelenenden weisen zur Bewirkung der Verbindung geeignete Kupplungselemente auf. Besonders bevorzugt wird, wenn metallische Kupplungselemente vorgesehen sind, welche mit den Bowdenzügen wenigstens kraft- und formschlüssig, überaus bevorzugt auch stoffflüssig, verbunden sind. Geeignet sind insbesondere Kupplungselemente aus Zink, deren Bruchlast 1000 Newton übersteigen sollte, um hierdurch ebenfalls sicherzustellen, dass die oben bereits erwähnten Missbrauchskräfte von der erfindungsgemäßen Bowdenzugkupplung sicher und ohne Gefahr von Bruch aufgenommen werden können.

Bevorzugt wird eine Ausgestaltungsform der Erfindung, bei der die Bowdenzüge über einen Bajonettverschluss miteinander verbindbar sind. Bevorzugt wird hierbei, dass Kupplungselemente mit den Seilenden der miteinander zu verkuppelnden Bowdenzüge fest verbunden sind, wobei das erste Kupplungselement einen Bajonettdorn und das zweite Kupplungselement eine Bajonettaufnahme ausbildet. Überaus bevorzugt wird dabei, wenn die Bajonettaufnahme so gestaltet ist, dass in der Schließstellung eine Verrastung erfolgt. Insbesondere wird hierbei ein Hinterschnitt in der Aufnahme, insbesondere in der Führung für wenigstens eine der Nasen des Bajonettdorns, bevorzugt.

In einer weiteren bevorzugten Ausgestaltungsform der Erfindung sind die Gehäuseteile, insbesondere ein Gehäusekorpus und ein Gehäusedeckel, über einen Bajonettverschluss miteinander verbindbar. Dieser Bajonettverschluss kann bevorzugt dadurch verwirklicht sein, dass an dem Deckel wenigstens zwei einander gegenüberliegende Rastnasen in Richtung in den Gehäusekorpus hervorstehen, welche in komplementäre Nuten an der Außenseite des Gehäusekorpus die Axial- und Drehbewegung bis zu einer Raststellung eingreifen.

Überaus bevorzugt wird, wenn sowohl die Bowdenzugseelen als auch die Gehäuseteile mittels eines Bajonettverschlusses miteinander verbindbar sind, um so die erfindungsgemäße Bowdenzugkupplung herzustellen. Insbesondere wird in diesem Zusammenhang bevorzugt, wenn während der Montagebewegung die Verkupplung der Bowdenzugseelen bereits nach Ausführen einer Teildrehbewegung von beispielsweise etwa 45 Grad abgeschlossen ist und die Verrastung der Gehäuseteile miteinander nach einer weiteren Teildrehung um vorzugsweise weitere 45 Grad in gleicher Drehrichtung erfolgt. Eine Demontage der erfindungsgemäßen Bowdenzugkupplung würde dann bei Ausführung einer ersten, umgekehrten Teildrehbewegung um vorzugsweise etwa 45 Grad zwar ein erstes Lösen der Verrastung der miteinander verbundenen Gehäuseteile bewirken, jedoch noch kein Lösen der Kupplung zwischen den Bowdenzügen. Dies würde erst durch Ausführen auch der weiteren Teildrehbewegung um vorzugsweise weitere 45 Grad in die Ausgangsstellung bewirkt werden.

Besonders bevorzugt wird hierbei eine Ausgestaltungsform der Erfindung, bei der das Gleiten der miteinander verkuppelten Bowdenzugseelen innerhalb des Gehäuses erst nach der vollständigen Verrastung des Gehäuses ermöglicht wird. Mit besonders einfachen Mitteln wird dies dadurch erreicht, dass die Kupplungselemente sowie der Verschieberaum innerhalb des Gehäuses einen unrunden, vorzugsweise rechteckigen Querschnitt aufweisen und die miteinander verkuppelten Bowdenzugseelen erst durch die letzte Teildrehbewegung zur Verrastung der Gehäuseteile miteinander in eine Stellung gebracht werden, bei der die Querschnitte des Verschieberaums und der Kupplungselemente einander vollständig überdecken.

In einer weiteren bevorzugten Ausgestaltungsform der Erfindung wird die händische Montage der Bowdenzugkupplung dadurch erleichtert, dass an zumindest einem Gehäuseteil, vorzugsweise dem Gehäusedeckel, zwei einander gegenüberliegende Drehlaschen angeordnet sind, über die die erfindungsgemäße Drehbewegungskomponente leicht von Hand auf das entsprechende Gehäuseteil aufgebracht werden kann.

In einer weiteren bevorzugten Ausgestaltungsform der Erfindung weist das Gehäuse an seiner Außenseite zudem eine Haltelasche zum Halten des Gehäuses an einem vorgesehenen Anbauteil, vorzugsweise einem Blech- und/oder wenigstens einem Rundloch wie etwa einer Bohrung, auf. Überaus bevorzugt wird eine Ausgestaltungsform, bei der an der Außenseite wenigstens eines Gehäuseteils eine Aufnahme, vorzugsweise eine Rastaufnahme, zum Anbringen einer geeigneten Haltelasche vorgesehen ist. Hierdurch wird mit besonders einfachen Mitteln bewirkt, dass die erfindungsgemäße Bowdenzugkupplung ohne jede bauliche Veränderung des Gehäuses und allein durch Austausch geeigneter Haltelaschen für unterschiedliche Anbauteile geeignet und mit diesen verbunden werden kann.

Gemäß einem zweiten Aspekt der Erfindung wird ein Verfahren zum lösbaren Verkuppeln zweier Bowdenzüge innerhalb eines wenigstens zwei Gehäuseteile umfassenden Gehäuses unter Verwendung einer erfindungsgemäßen Bowdenzugkupplung gemäß dem ersten Aspekt der Erfindung zur Verfügung gestellt. Erfindungsgemäß werden zwei Gehäuseteile und die Bowdenzugseelen über eine Bewegung, insbesondere eine einzelne Bewegung, welche wenigstens eine Drehkomponente um die Längsachse der Bowdenzüge umfasst, wasser- und staubdicht miteinander verbunden und verrastet.

Die hiermit verbundenen Effekte und Vorteile stimmen mit denjenigen, die bereits eingangs in Bezug auf die erfindungsgemäße Bowdenzugkupplung beschrieben worden sind, überein.

Bevorzugt wird jedoch ein Verfahren, bei dem die Verbindungs- und Verrastbewegung zum Herstellen der erfindungsgemäßen Bowdenzugkupplung aus einer Lieferstellung über eine Vorraststellung hinaus in eine Endraststellung erfolgt. Die Vorraststellung wird hierdurch beispielsweise durch eine Verrastung der miteinander verbundenen Kupplungselemente der Bowdenzugseelen bewirkt, bei der vorzugsweise die Bowdenzugseelen bereits vollständig miteinander verkuppelt sind, jedoch noch nicht vollständig gleitbar innerhalb des Gehäuses, insbesondere innerhalb dessen Verschieberaum, gelagert sind.

Wie oben bereits erwähnt, wird besonders bevorzugt, wenn das Gleiten der miteinander verkuppelten Bowdenzüge innerhalb des Gehäuses, vorzugsweise des Verschiebraums, erst mit Vollendung der Verbindung und Verrastung der Gehäuseteile in der Endraststellung ermöglicht wird.

### 4. Kurze Beschreibung der Zeichnungen

Die Erfindung wird im Folgenden unter Verweis auf eine Reihe von Zeichnungen näher erläutert, welche jeweils bevorzugte Ausführungsformen von Teilkomponenten der erfindungsgemäßen Bowdenzugkupplungen und der gesamten Bowdenzugkupplung darstellen. In den Figuren sind
- Fig. 1: eine schematische Darstellung zweier mit Kupplungselementen verbundener Bowdenzugseelen,
- Fig. 2: eine schematische Darstellung eines Gehäusedeckels mit einer hindurch geführten Bowdenzugseele,
- Fig. 3: eine schematische Darstellung eines Kupplungsgehäuses in einer noch nicht verrasteten Fügegrundstellung,
- Fig. 4: eine Teilschnittdarstellung der erfindungsgemäßen Bowdenzugkupplung in einer Vorraststellung,
- Fig. 5: eine teilgeschnittene Ansicht einer erfindungsgemäßen Bowdenzugkupplung in einer Verraststellung,
- Fig. 6: eine geschnittene Ansicht einer erfindungsgemäßen Bowdenzugkupplung mit bereits in Längsrichtung verschobenen Bowdenzugseelen,
- Fig. 7: eine schematische Darstellung eines Gehäusekorpus mit verschiedenen Haltelaschen,
- Fig. 8: eine schematische Darstellung eines Gehäusedeckels,
- Fig. 9: eine schematische Darstellung des Inneren eines Gehäusekorpus mit darin angeordneter Bajonettaufnahme und Bowdenzugseele in Vorraststellung
- Fig. 10: eine schematische Perspektivansicht eines erfindungsgemäßen Gehäusekorpus mit darin angeordneter Bajonettaufnahme.

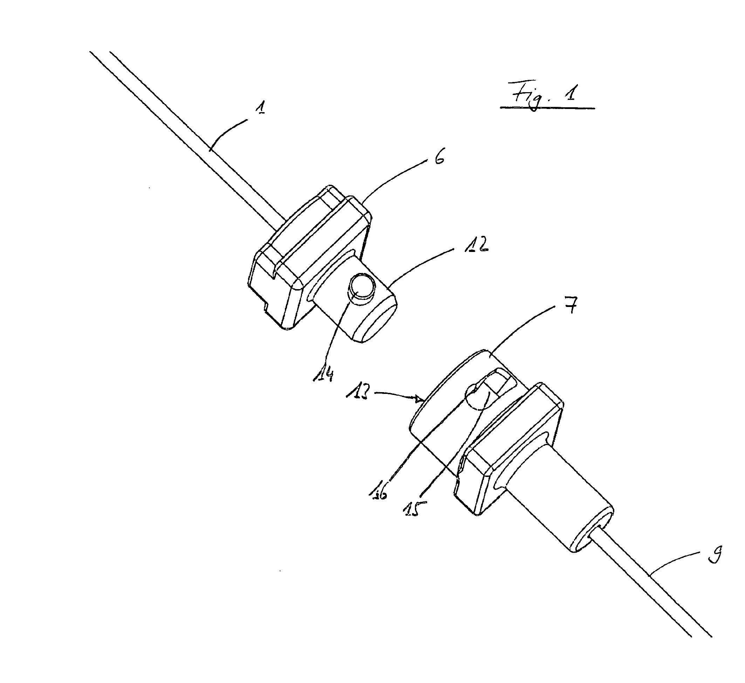

Fig. 1 zeigt zwei miteinander zu verbindende Bowdenzugseelen 1, 9, wobei die erste Bowdenzugseele 1 mit einem Kupplungselement 6 aus Zink sowohl kraft- als auch formschlüssig so verbunden ist, dass Zugkräfte von mehr als 1000 Newton sicher von der Verbindung aus Bowdenzugseele 1 und Kupplungselement 6 aufgenommen werden können. Gleiches gilt für die Verbindung der Bowdenzugseele 9 mit dem Kupplungselement 7. Während das erste Kupplungselement 6 mit einem Bajonettdorn 12 ausgestattet ist, weist das zweite Kupplungselement 7 eine Bajonettdornaufnahme 13 auf, die so gestaltet ist, dass eine axiale Verbindung der Bowdenzugseele 1, 9, über die Kupplungselemente 6, 7 bewirkt wird. Während der Verbindung der Kupplungselemente 6, 7 wird der Bajonettdorn 12 so in die Bajonettdornaufnahme 13 eingeführt, dass die Bajonettdornnasen 14 am Bajonettdorn 12 innerhalb der Führung 15 für die Bajonettdornnasen 14 bis zu einer Verraststellung, die durch den Hinterschnitt 16 innerhalb der Führung 15 bewirkt wird, geführt werden. Bajonettverschlüsse dieser Art erfordern in der dem Fachmann bekannten Weise zuerst eine axiale Bewegung entlang der Längsachse der Bowdenzüge1, 9 und eine anschließende Drehbewegung um die Längsachse der Bowdenzüge 1, 9 herum, um die Kupplung zu bewirken.

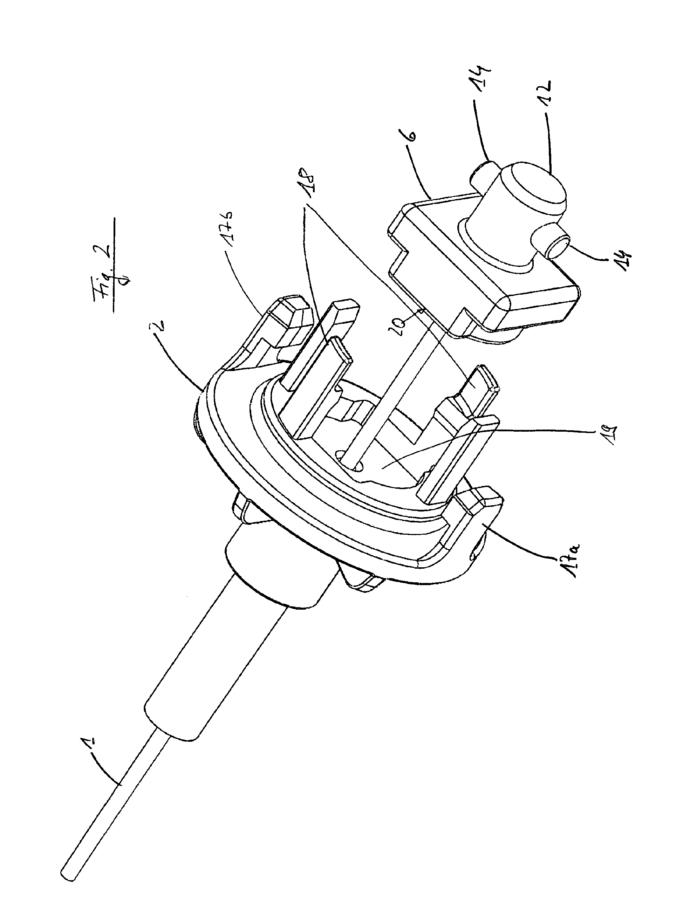

Fig. 2 zeigt eine schematische Ansicht eines Gehäusedeckels 2, durch den die mit dem Kupplungselement 6 verbundene Bowdenzugseele 1 hindurchgeführt ist. Der Deckel 2 weist zwei einander gegenüberliegende Rastnasen 17a, 17b zur späteren Verbindung des Deckels 2 mit dem (nicht dargestellten) Gehäusekorpus auf. Mittig an der Unterseite des Deckel 2 ist eine Aufnahme 19 angeordnet, deren Form mit der Unterseite 20 des Kupplungselements 6 komplementär so gestaltet ist, dass das Kupplungselement 6 nur derart innerhalb des Gehäusedeckels 2 angeordnet werden kann, dass der Bajonettdorn 12 und insbesondere die daran angeordneten Bajonettdornnasen 14 in einer vorab festgelegten Weise, insbesondere bevorzugt ausgerichtet auf die Rastnasen 17a, 17b, aufgenommen werden kann. Erst in dieser ausgerichteten Endstellung, bei der die Unterseite 20 des Kupplungselements 6 in der Aufnahme 19 des Deckels 2 zu liegen kommt, kann eine leichte Verrastung des Kupplungselements 6 unter Einwirkung der zwei um den Umfang der Aufnahme 19 angeordneten Haltenasen 18 erfolgen. Hierdurch wird eine Lieferstellung des mit dem Gehäusedeckel 2 verbundenen Bowdenzugs 1 sichergestellt, welche vor der Montage der erfindungsgemäßen Bowdenzugkupplung kein Nachjustieren durch den Monteur erfordert und somit den Blindverbau der erfindungsgemäßen Bowdenzugkupplung mit einfachen Mitteln unterstützt.

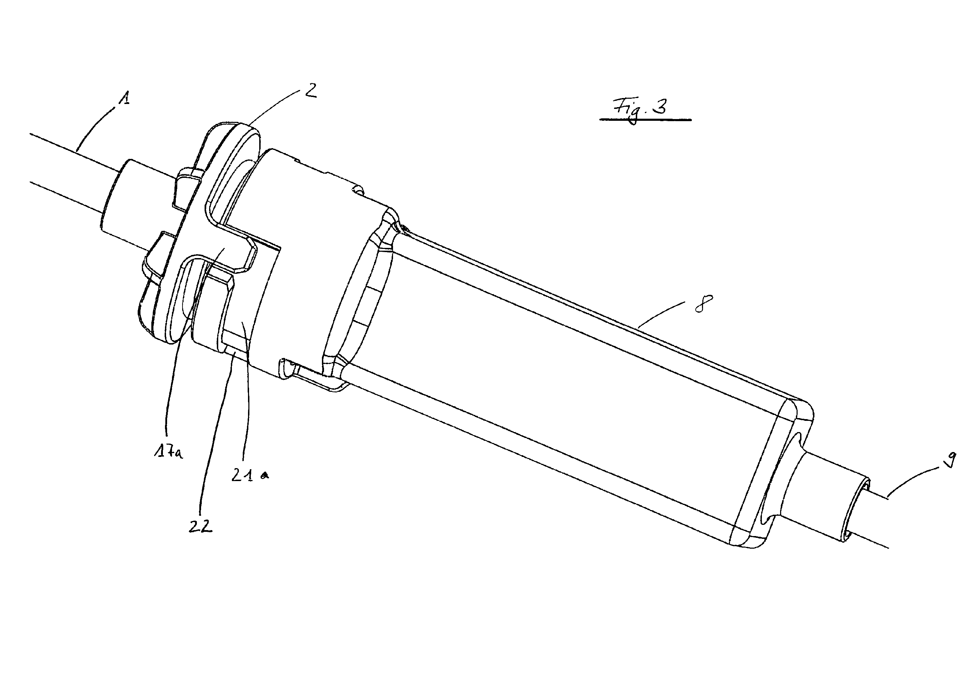

Fig. 3 zeigt eine schematische Draufsicht auf eine erfindungsgemäße Bowdenzugkupplung umfassend den mit einem Gehäusedeckel 2 verbundenen Bowdenzug 1 sowie den mit einem Gehäusekorpus 8 verbundenen Bowdenzug 9. In der dargestellten Form sind der Gehäusedeckel 2 und der Gehäusekorpus 8, beide aus Kunststoff im Spritzgussverfahren gefertigt, noch nicht vollständig miteinander verbunden, vielmehr greift die Rastnase 17a (und die (verdeckt angeordnet) und nicht dargestellte Rastnase 17b in die Rastnasenaufnahme 21 a (und die nicht dargestellte und verdeckte Rastnasenaufnahme 21 b) an der Außenseite des Gehäusekorpus 8 ein. Auch die Formgebung der Rastnasenaufnahme 21a bewirkt ein axiales Einschieben in einer ersten Bewegungskomponente sowie eine Drehbewegungskomponente des Deckels 2 (zusammen mit dem Bowdenzug 1) in den Endrastbereich 22 innerhalb der Rastaufnahme 21 a hinein.

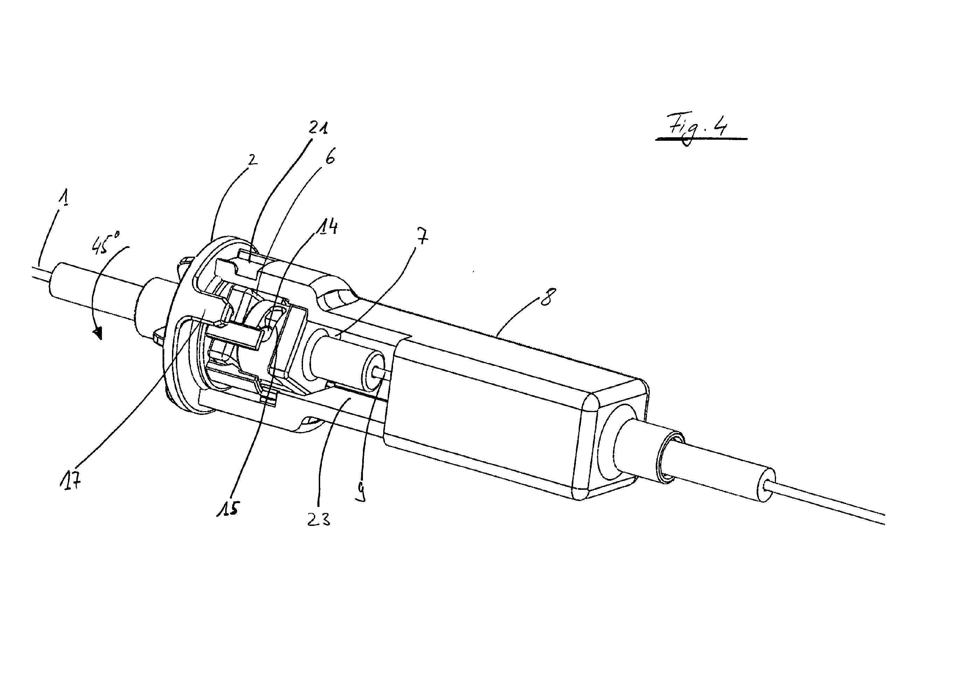

Fig. 4 zeigt die erfindungsgemäße Bowdenzugkupplung in einer Vorraststellung, bei der der Deckel 2 und der Gehäusekorpus 8 bereits um einen vorgegebenen Drehwinkel von vorzugsweise 45 Grad relativ zueinander tordiert wurden. In dieser Vorraststellung ist die Kupplung der Bowdenzugseelen 1 und 9 und von deren Kupplungselementen 6, 7 bereits abgeschlossen, was dadurch dargestellt ist, dass die Rastdornnase 14 bereits in ihre Rastposition innerhalb der Führung 15 liegt. In dieser Vorraststellung kann ein Gleiten der Kupplungselemente 6, 7 innerhalb des Verschieberaums 23 des Gehäuses 8 jedoch aufgrund der Formgebung der Kupplungselemente 6, 7 und der komplementären Formgebung des Querschnitts des Verschieberaums 23 noch nicht erfolgen, da sich die Kupplungselemente 6, 7 noch nicht in Ihrer rotativen Funktionstellung zum Verschieberaum des Gehäuses8 befinden. Die Verraststellung der Rastnasen 17 innerhalb der Rastnasenaufnahme 21 wurde noch nicht erreicht, die haptische und akustische Rückmeldung an den Benutzer ist noch nicht erfolgt.

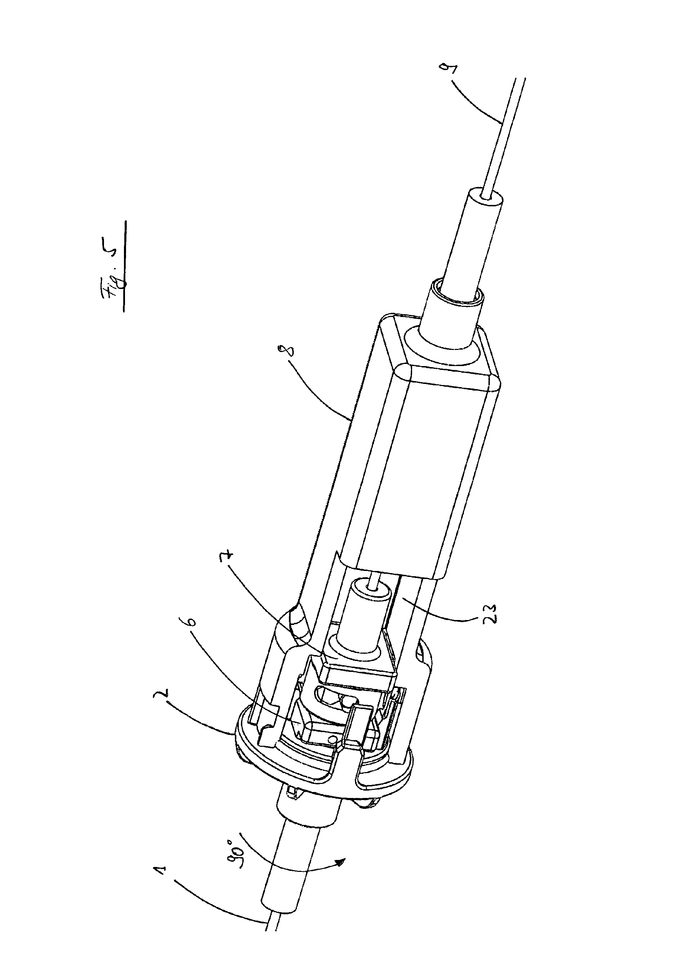

Fig. 5 zeigt eine teilweise geschnittene Ansicht einer erfindungsgemäßen Bowdenzugkupplung in ihrer Verraststellung, bei der der Gehäusedeckel gegenüber dem Gehäusekorpus 8 um einen vorgegebenen Drehwinkel von vorzugsweise 90 Grad in die Raststellung gedreht wurde, um hierdurch eine wasserdichte und staubdichte Verbindung von Deckel 2 und Gehäusekorpus 8 zu bewirken. Die Bewegung des Deckels 2 aus der in Fig. 4 dargestellten Vorraststellung in die hier dargestellte Verschließstellung hat auch eine Drehung der Kupplungselemente 6, 7 der Bowdenzugseelen 1, 9 in eine Stellung bewirkt, in der ein freies Gleiten der Kupplungselemente 6, 7 innerhalb des Verschieberaums 23 ermöglicht wird. Die miteinander verkuppelten Bowdenzugseelen können somit innerhalb des Gehäuses 8 frei relativ zum feststehenden Gehäuse 8 innerhalb der durch den Verschieberaum 23 vorgegebenen Grenzen in Längsrichtung der Bowdenzugseelen 1, 9 bewegt werden und sind hierbei gleichzeitig gegen jede Tordierung sicher geschützt.

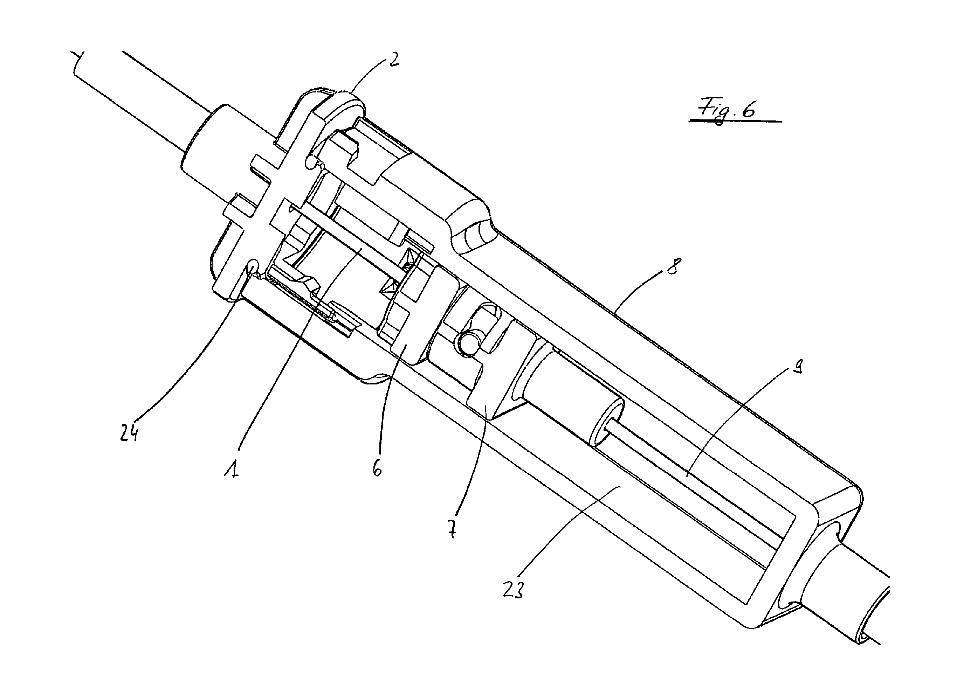

Fig. 6 zeigt eine vollständig geschnittene Darstellung einer erfindungsgemäßen Bowdenzugkupplung, in der die die Bowdenzugseelen 1, 9 verbindenden Kupplungselemente 6, 7 innerhalb des Verschieberaums 23 gleitend gelagert sind. Deutlich zu sehen ist auch eine O-Ring-Dichtung 24 an der Verbindungsstelle von Gehäusedeckel 2 und Gehäusekorpus 8, welche durch die Verbindung von Gehäusedeckel 2 und Gehäusekorpus 8 soweit komprimiert wurde, dass die Wasserdichtigkeit und Staubdichtigkeit der erfindungsgemäßen Bowdenzugkupplung dauerhaft sichergestellt ist. Diese wird durch die an beiden Bowdenzughüllen zum Gehäusedeckel 2 und Gehäusekorpus 8 eingebauten O-Ringe vervollständigt

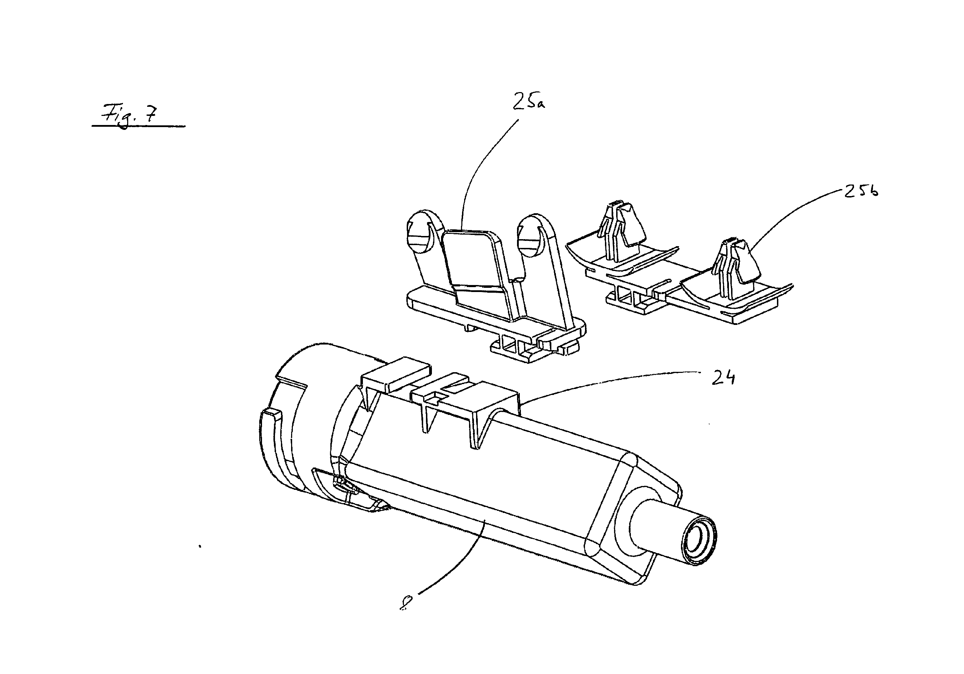

Fig. 7 zeigt eine Ausführungsform des Gehäuses der erfindungsgemäßen Bowdenzugkupplung, hier des Gehäusekorpus 8, das an seiner Außenseite mit einer universellen Aufnahme 24 zur Verrastung geeigneter Halteelemente 25a, 25b versehen ist. Die Halteelemente 25a, 25b sind so gestaltet, dass sie den Gehäusekorpus 8 sicher an jeder Art von Umgebung, sei es einer Blechkante (Halteelement 25a) oder zwei benachbarten Bohrungen (Halteelement 25b) sicher fixieren können. Durch den erfindungsgemäßen Wechselaufsatz wird eine Umgestaltung der erfindungsgemäßen Bowdenzugkupplung oder der Werkzeug zu deren Herstellung, hier insbesondere des Spritzgusswerkzeugs für die Herstellung des Kunststoffgehäuses 8, nicht mehr erforderlich, vielmehr kann allein durch Neugestaltung des Halteelements 25 jede beliebige Anbringung der erfindungsgemäßen Bowdenzugkupplung an der gewünschten Stelle bewirkt werden. Die Verbindung zwischen Gehäusekorpus und Halteelement ist jederzeit leicht lösbar.

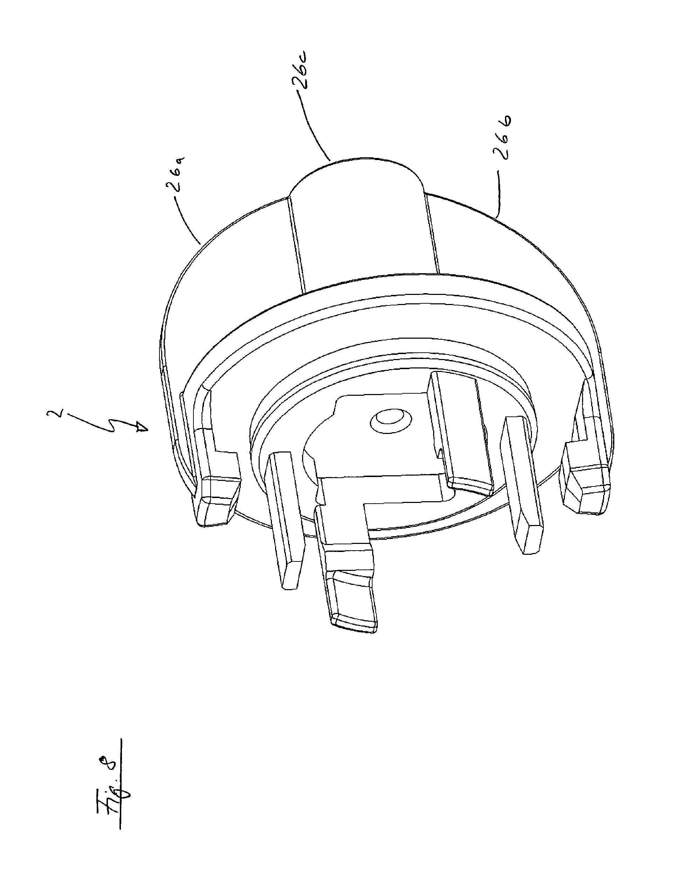

Fig. 8 zeigt eine bevorzugte Ausführungsform des Gehäusedeckels 2 einer erfindungsgemäßen Bowdenzugkupplung, bei der der Gehäusedeckel 2 auf seiner dem (nicht dargestellten) Gehäusekorpus abgewandten Seite einen zentralen zylindrischen Abschnitt 26c zur Aufnahme der Bowdenzughülle und Hindurchführung der (nicht dargestellten) Bowdenzugseele aufweist, wobei dieser zentrale zylindrische Abschnitt 26c zu beiden Seiten von Drehlaschen 26a, 26b benachbart ist, deren Form und Flächen so gewählt sind, dass ein Monteur die Drehbewegung des Deckels 2 sowohl zur Montage als auch zur Demontage der erfindungsgemäßen Bowdenzugkupplung leicht von Hand durch Aufbringung von Kraft auf die Drehlaschen 26a, 26b bewirken kann.

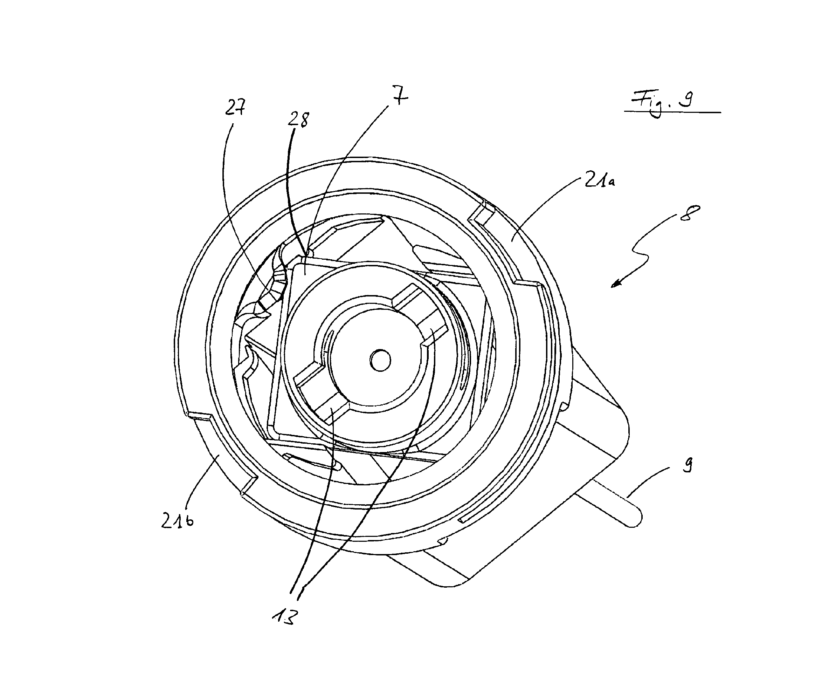

Fig. 9 zeigt eine Innenansicht des Gehäusekorpus 8 mit darin angeordnetem Kupplungselement 7 des Bowdenzugs 9. Durch den Vorsprung 27 und die Rastnase 28 innerhalb des Gehäuses 8 wird der rechteckige Grundkörper des Kupplungselements 7 so in der Lieferstellung des Grundkörpers 8 gehalten, dass die Bajonettdornaufnahme 13 in einer definierten Rotationsstellung zu den Rastaufnahmen 21 a, 21 b an der Außenseite des Gehäusegrundkörpers 8 ausgerichtet ist. In einer derartigen Lieferstellung bereitgestellt, kann der Gehäusekorpus 8 direkt und ohne weitere Einstellungen mit (nicht dargestellten) Gehäusedeckeln verbunden werden, indem wie in Fig. 2 gezeigt der Bajonettdorn 12 innerhalb der Aufnahme 19 des Deckels 2 ebenfalls in seiner Lieferstellung fixiert ist. Durch Drehen des (nicht dargestellten) Deckels 2 zur Verrastung mit dem Gehäusegrundkörper 8 wird das Kupplungselement 7 durch die Drehung des (nicht dargestellten) Deckels 2 und des (ebenfalls nicht dargestellten) Rastdorns 12 im Uhrzeigersinn aus der hier dargestellten Vorrastposition in seine Verschiebelage entlang des Grundkörpers 8 gebracht.

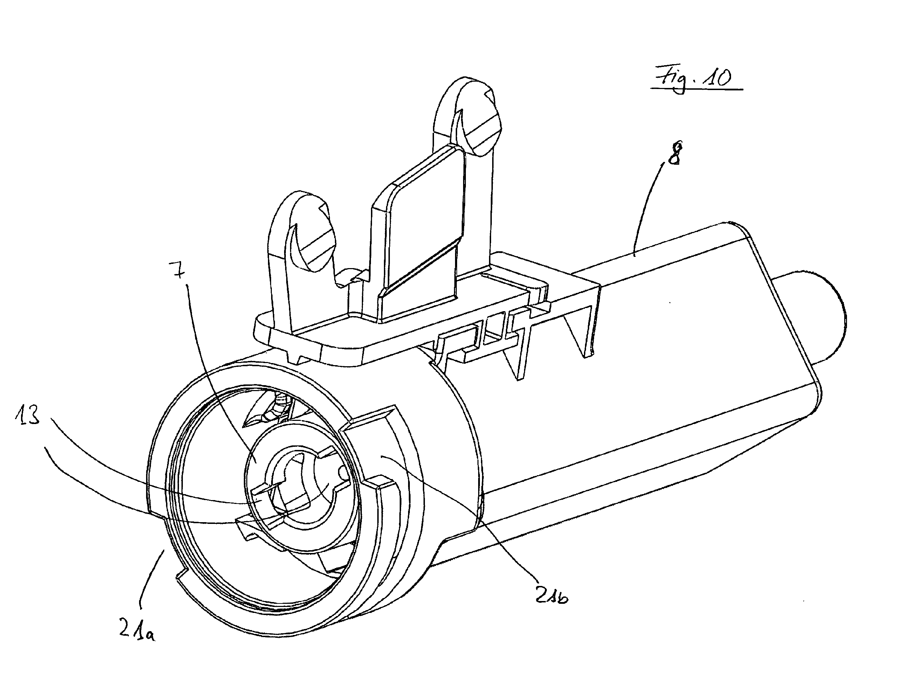

Fig. 10 zeigt ebenso wie Figur 9 einen Gehäusegrundkörper 8 in einer Lieferstellung, bei der die Bajonettaufnahme 7 vorverrastet innerhalb des Grundkörpers 8 angeordnet ist. Bei dieser Lieferstellung sind die Aufnahmen 13 für die (hier nicht dargestellten) Bajonettdornnasen ausgerichtet auf die Einführbereiche der Rastnasenaufnahmen 21a, 21 b.

## Patentansprüche

1. Bowdenzugkupplung zum lösbaren Verkuppeln zweier Bowdenzughüllen und deren Seelen (1, 9) innerhalb eines Gehäuses, wobei die verkuppelten Bowdenzugseelen (1, 9) entlang ihrer Längsachse über einen vorgegebenen Maximalweg verschiebbar gelagert sind,
**dadurch gekennzeichnet, dass**
das Gehäuse wenigstens zwei Gehäuseteile (2, 8) umfasst, welche über eine Axialbewegung in Bezug auf die Bowdenzughüllen und deren Seelen (1, 9), die wenigstens eine Drehkomponente um die Längsachse der Bowdenzughüllen und deren Seelen (1, 9) umfasst, wasser- und staubdicht miteinander verbindbar und verrastbar sind.

2. Bowdenzugkupplung gemäß Anspruch 1, **dadurch gekennzeichnet, dass** die Bowdenzugseelen (1, 9) innerhalb des Gehäuses axial verkuppelt sind.

3. Bowdenzugkupplung gemäß einem der voranstehenden Ansprüche, **dadurch gekennzeichnet, dass** das Gehäuse einen Verschieberaum (23) aufweist, innerhalb dessen die verkuppelten Bowdenzugseelen (1, 9) gleitend gelagert sind.

4. Bowdenzugkupplung gemäß einem der voranstehenden Ansprüche, **dadurch gekennzeichnet, dass** die Bowdenzugseelen (1, 9) über einen Bajonettverschluss (12, 13) miteinander verbindbar sind.

5. Bowdenzugkupplung gemäß einem der voranstehenden Ansprüche, **dadurch gekennzeichnet, dass** die Gehäuseteile (2, 8) über einen Bajonettverschluss (17, 21) miteinander verbindbar sind.

6. Bowdenzugkupplung gemäß einem der voranstehenden Ansprüche, **dadurch gekennzeichnet, dass** die Verbindung der Gehäuseteile (2, 8) über Rastnasen (17) und korrespondierende Aufnahmen (21) zwangsgeführt bewirkbar ist.

7. Bowdenzugkupplung gemäß einem der voranstehenden Ansprüche, **dadurch gekennzeichnet, dass** die Bowdenzugseelen (1, 9) an ihren miteinander zu verkuppelnden Enden vorzugsweise metallische Kupplungselemente (6, 7) aufweisen, welche mit den Bowdenzugseelen (1, 9) wenigstens kraft- und formschlüssig verbunden sind.

8. Bowdenzugkupplung gemäß Anspruch 7, **dadurch gekennzeichnet, dass** die Gehäuseteile (2, 8) Aufnahmen (19, 27) zum Halten, vorzugsweise Vorrasten, der Kupplungselemente (6, 7) in einer Lieferstellung aufweisen.

9. Bowdenzugkupplung gemäß einem der voranstehenden Ansprüche, **dadurch gekennzeichnet, dass** über die Bowdenzugkupplung eine Betriebskraft von mehr als 200 N, vorzugsweise mehr als 250 N, übertragbar ist.

10. Bowdenzugkupplung gemäß einem der voranstehenden Ansprüche, **dadurch gekennzeichnet, dass** sie zur Kupplung eines antriebsseitigen (1) und eines schlossseitigen (9) Bowdenzugs einer Türverriegelung, vorzugsweise in einem Kraftfahrzeug, insbesondere im Türinnenraum eines Kraftfahrzeugs angeordnet, dient.

11. Bowdenzugkupplung gemäß einem der voranstehenden Ansprüche, **dadurch gekennzeichnet, dass** wenigstens ein Gehäuseteil (2, 8) zumindest eine Lasche (26) zum händischen Bewirken der Drehkomponente der Verbindungs- und Verrastbewegung aufweist.

12. Bowdenzugkupplung gemäß einem der voranstehenden Ansprüche, **dadurch gekennzeichnet, dass** das Gehäuse eine Aufnahme (24) zum Halten, vorzugsweise Verrasten, wenigstens einer Haltelasche (25) zum Halten des Gehäuses an einem vorgesehenen Anbauteil, vorzugsweise einem Blech und/oder wenigstens einer Bohrung, aufweist.

13. Verfahren zum lösbaren Verkuppeln zweier Bowdenzughüllen und deren Bowdenzugseelen (1, 9) innerhalb eines wenigstens zwei Gehäuseteile (2, 8) umfassenden Gehäuses, wobei die verkuppelten Bowdenzugseelen (1, 9) entlang ihrer Längsachse über einen vorgegebenen Maximalweg verschiebbar gelagert sind, mit einer Bowdenzugkupplung gemäß einem der Ansprüche 1 bis 12,
**dadurch gekennzeichnet, dass**
zwei Gehäuseteile (2, 8) und die Bowdenzughüllen und deren Bowdenzugseelen (1, 9) über eine Bewegung, insbesondere eine einzelne Bewegung, die wenigstens eine Drehkomponente um die Längsachse der Bowdenzughüllen und deren Bowdenzugseelen (1, 9) umfasst, wasser- und staubdicht miteinander verbunden und verrastet werden.

14. Verfahren gemäß Anspruch 13, **dadurch gekennzeichnet, dass** die Verbindungs- und Verrastbewegung über eine Vorraststellung hinaus in eine Endraststellung erfolgt.

15. Verfahren gemäß einem der Ansprüche 13 oder 14, **dadurch gekennzeichnet, dass** das Gleiten der verkuppelten Bowdenzughüllen und deren Bowdenzugseelen (1, 9) innerhalb des Gehäuses, vorzugsweise innerhalb des Verschieberaums (23), erst mit Vollendung der Verbindung und Verrastung der Gehäuseteile (2, 8), vorzugsweise in der Endraststellung, ermöglicht wird.
